# EUROPEAN PATENT SPECIFICATION

(11) **EP 2 860 961 B1**
(45) Date of publication and mention of the grant of the patent: **01.08.2018**
(21) Application number: 14003326.7
(22) Date of filing: 25.09.2014
(51) Int. Cl.: H04N 5/225, H04M 1/02, H04N 5/232

(54) **Mobile terminal and controlling method thereof**
Mobiles Endgerät und Steuerungsverfahren dafür
Terminal mobile et son procédé de contrôle

(30) Priority: 11.10.2013 KR 20130121396
(43) Date of publication of application: 15.04.2015
(73) Proprietor: LG ELECTRONICS INC., Yeongdeungpo-gu Seoul 150-721 (KR)
(72) Inventor: Song, Hosung, 137-893 Seoul (KR); LEE, Keansub, 137-893 Seoul (KR); KIM, Junyeop, 137-893 Seoul (KR); KIM, Mina, 137-893 Seoul (KR)
(74) Representative: Beyer, Andreas

(56) References cited:
- EP-A1- 2 453 369
- WO-A1-2014/166521
- GB-A- 2 499 427
- JP-A- 2005 003 852
- JP-A- 2008 147 756
- US-A1- 2009 128 647
- US-A1- 2010 207 774
- US-A1- 2011 098 083

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for photographing and viewing a photography desired subject more conveniently.

### Discussion of the Related Art

Generally, terminals can be classified into mobile/portable terminals and stationary terminals. The mobile terminals can be further classified into handheld terminals and vehicle mount terminals according to possibility of user's direct portability.

As functions of the terminal are getting diversified, the terminal tends to be implemented as a multimedia player provided with composite functions such as photographing of photos or videos, playback of music or video files, game play, broadcast reception and the like for example.

To support and increase the terminal functions, it may be able to consider the improvement of structural parts and/or software parts of the terminal.

Recently, as performance of a camera provided to a mobile terminal is enhanced, an image or video increasingly tends to be taken through the mobile terminal. Therefore, the demand for a method of photographing and viewing a photography desired subject more conveniently is rising.

Document US 2009/128647 A1 may be construed to disclose a system and method for automatically and optically capturing an image in a handheld image capture device. The system includes an imager and an actuated mounting mechanism attached to the imager. The imager has one or more degrees of freedom (DOF) and includes at least one of a pan DOF, a tilt DOF, and a rotate DOF. The device can auto-center a selected object of interest in the image frame, auto-zoom in on the selected object of interest, and/or auto-rotate the captured image. The method includes providing an imager having a pan degree of freedom (DOF) and a tilt DOF, capturing an image by the imager to produce an image frame, selecting an object of interest from the captured image, and auto-centering the selected object in the image frame using one or both of the pan DOF and the tilt DOF.

Document JP 2008-147756 A may be construed to disclose a mobile phone comprising a first camera provided on one surface of a case, a second camera provided on the same surface as the first camera and different in viewing angle of a lens from the first camera, a control unit which switches a camera to be operated to the other camera between the two cameras when a camera switching instruction is input during operation of at least one of the two cameras which are the first camera and second camera, and a communication unit which transmits the photographed image of the camera in operation between the two cameras to the outside through a base station.

Document WO 2014/166521 constitutes prior art under Article 54(3) EPC and may be construed to disclose a mobile electronic device comprising a processor configured to control the operation of said mobile electronic device, and a front-facing display screen coupled to said processor and arranged on a front side of said mobile electronic device. The mobile electronic device further comprises a mechanically rotatable camera, said camera being rotatable around a rotation axis and configured to capture images around said rotation axis, and said camera being coupled to said processor, and a rotating motor coupled to said rotatable camera for mechanically rotating the mechanically rotatable camera and said rotating motor coupled to said processor, and wherein said processor is configured to control a rotational orientation of the mechanically rotatable camera by control of the rotating motor for mechanically rotating the mechanically rotatable camera.

Document US 2010/207774 A1 may be construed to disclose a technique in which, in a handheld electronic device, a motor is controlled to adjust, according to input received at a user-input element of the device, an angle of rotation of a camera module about a rotation axis of the camera module. The camera module is partially embedded in a housing of the device. An image sensor is embedded in the camera module and senses an image in a field of view that is centered around a line of sight. The line of sight is perpendicular to the rotation axis. An orientation of the housing relative to a direction of gravity is sensed, and the motor is controlled to rotate the camera module and hence the line of sight about the rotation axis to achieve a particular angle between the line of sight and the direction of gravity.

Document EP 2 453 369 A1 may be construed to disclose a mobile terminal and metadata setting method thereof are disclosed, by which metadata of various types can be set. It includes displaying an image including at least one object, selecting a specific object from the at least one object, extracting the specific object from the image, setting the metadata for the extracted specific object, and storing the metadata set for the specific object and an image including the specific object.

Document JP 2005-003852 A may be construed to disclose an automatic photographing device having a camera for automatically photographing a person to be photographed, a person-to-be-photographed detection means for detecting the person to be photographed out of an inputted image in the camera, a photographing state deciding means for deciding the propriety of a photographing state from the positional state of the person to be photographed within the photographic frame of the camera, and a photographing means for performing photographing by the camera when the photographing state decided by the photographing state deciding means is excellent.

Document US 2011/098083 A1 may be construed to disclose methods and apparatus to create and display screen stereoscopic and panoramic images. Methods and apparatus are provided to generate multiple images that are combined into a stereoscopic or a panoramic image. A controller provides correct camera settings for different conditions. An image processor creates a stereoscopic or a panoramic image from the correct settings provided by the controller. A plurality of lens/sensor units is placed on a carrier. Lens/sensor units are rotationally aligned. A controller rotationally aligns images of lens/sensor units that are rotationally misaligned. The camera is enabled to communicate via a wired or via a wireless connection, with a separate, mobile, ultrathin, ultralight, display with a large display screen not smaller than 25 by 20 cm or not smaller than 20 by 15 cm to provide color images including video images in real-time. A compact controllable platform to hold and rotate a device with a lens/sensor unit is also provided.

Document GB 2,449 427 A may be construed to disclose an object tracking apparatus comprising a moveable unit; a first image acquisition device, or camera, mounted on the moveable unit; a second image acquisition device mounted on the moveable unit and pointing in substantially the same direction as the first image acquisition device; and a control device. The control device is configured to determine, from image data received from the first image acquisition device, positional information of an object represented in the image data to be tracked; and output a control signal to the moveable unit to control its movement and cause the second image acquisition device to track the object in accordance with the determined positional information. The control means might also use information about the relative separation of the first and second cameras.

### SUMMARY OF THE INVENTION

Accordingly, the present invention is directed to a mobile terminal and controlling method thereof that substantially obviate one or more problems due to limitations and disadvantages of the related art.

One object of the present invention is to provide a mobile terminal and controlling method thereof, by which a photography desired subject can be photographed and viewed more conveniently.

Particularly, after a photography desired subject has been determined, when a user fails to observe a photographing situation closely through a mobile terminal, although a motion is generated from the mobile terminal, one object of the present invention is to provide a mobile terminal and controlling method thereof, by which the corresponding subject can be photographed continuously.

Another object of the present invention is to provide a mobile terminal and controlling method thereof, by which each of a plurality of photography desired subjects can be photographed together.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The invention provides an apparatus, a method and a computer-readable medium according to the independent claims. Developments are set forth in the dependent claims.

Preferably, as embodied and broadly described herein, a mobile terminal according to the present invention includes at least one camera and a controller determining a 1^{st} subject in an image photographed through the at least one camera, the controller controlling at least one of a presence or non-presence of activation of the at least one camera and a view angle of the at least one camera to enable the 1^{st} subject to be continuously included in a photography result image.

Preferably, a method of controlling a mobile terminal according to the present invention includes the steps of determining a 1^{st} subject in an image photographed through at least one camera and controlling at least one of a presence or non-presence of activation of the at least one camera and a view angle of the at least one camera to enable the 1^{st} subject to be continuously included in a photography result image.

Accordingly, the present invention provides the following effects and/or features.

First of all, a photography desired subject can be continuously photographed more conveniently.

Particularly, the present invention controls a camera's motion or a plurality of cameras, thereby enabling a photography desired subject to be continuously photographed despite that a motion is generated from a mobile terminal.

Secondly, the present invention independently changes photographing areas of a plurality of cameras, thereby enabling each of a plurality of photography desired subjects to be photographed.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to one embodiment of the present invention;
FIG. 2 is a front perspective diagram of a mobile terminal according to one embodiment of the present invention;
FIG. 3A is a rear perspective diagram of the mobile terminal shown in FIG. 2;
FIG. 3B is a diagram for one example of changing an angle of view depending on a rotation of a camera along one rotational axis according to one embodiment of the present invention;
FIG. 3C is a diagram for one example of changing a photographing range depending on a view angle change shown in FIG. 3B;
FIG. 4A is a rear perspective diagram of a mobile terminal having two rear cameras;
FIG. 4B is a diagram for one example of view angles of two rear cameras according to one embodiment of the present invention;
FIG. 4C is a diagram for one example of a real photographing range depending on the camera deployment shown in FIG. 4B;
FIG. 5 is a flowchart for one example of a process for continuously photographing a photography desired subject in a mobile terminal according to one embodiment of the present invention;
FIG. 6 is a diagram for one example of types of controlling a camera depending on a motion of a mobile terminal in the mobile terminal according to one embodiment of the present invention;
FIG. 7 is a diagram for one example of a process for selecting a subject through face recognition in a mobile terminal according to one embodiment of the present invention;
FIG. 8 is a diagram for one example of a process for selecting a subject through user's eye tracking in a mobile terminal according to one embodiment of the present invention;
FIG. 9 is a flowchart for one example of an operating process in consideration of a subject and a maximum photographing available view angle in a mobile terminal according to another aspect of one embodiment of the present invention;
FIG. 10 is a diagram for one example of a visual effect displayed in consideration of a subject and a maximum photographing available view angle in a mobile terminal according to another aspect of one embodiment of the present invention;
FIG. 11 is a diagram for one example of a method of continuously photographing two subjects by determining each of the subjects in a mobile terminal according to further aspect of one embodiment of the present invention;
FIG. 12 is a diagram for one example of a type of performing an auto-photographing depending on a user's motion in a mobile terminal according to another embodiment of the present invention;
FIG. 13 is a diagram for another example of a type of performing an auto-photographing depending on a user's motion in a mobile terminal according to another embodiment of the present invention;
FIG. 14 is a diagram for one example of a type of playing a video in a mobile terminal according to one embodiment of the present invention;
FIG. 15 is a diagram for another example of a type of playing a video in a mobile terminal according to one embodiment of the present invention;
FIG. 16 is a diagram for one example of a type of modifying a sub-play region, moving the sub-play region, and playing a video through the modification and movement of the sub-play region in a mobile terminal according to one embodiment of the present invention;
FIG. 17 is a diagram for one example of a method of zooming in on a specific part of a video in a mobile terminal according to one embodiment of the present invention; and
FIG. 18 is a diagram for one example of a method of changing a portion of a whole video displayed on a touchscreen in a mobile terminal according to one embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used to denote elements in order to facilitate the disclosure only. Therefore, significant meanings or roles are not given to the suffixes themselves, and it is understood that the suffixes 'module', 'unit' and 'part' can be used together or interchangeably.

Features of embodiments of the present invention are applicable to various types of terminals. Examples of such terminals include mobile terminals, such as mobile phones, user equipment, smart phones, mobile computers, digital broadcast terminals, personal digital assistants, portable multimedia players (PMP) and navigators. However, by way of non-limiting example only, further description will be with regard to a mobile terminal 100, and it should be noted that such teachings may apply equally to other types of terminals such as digital TV, desktop computers and so on.

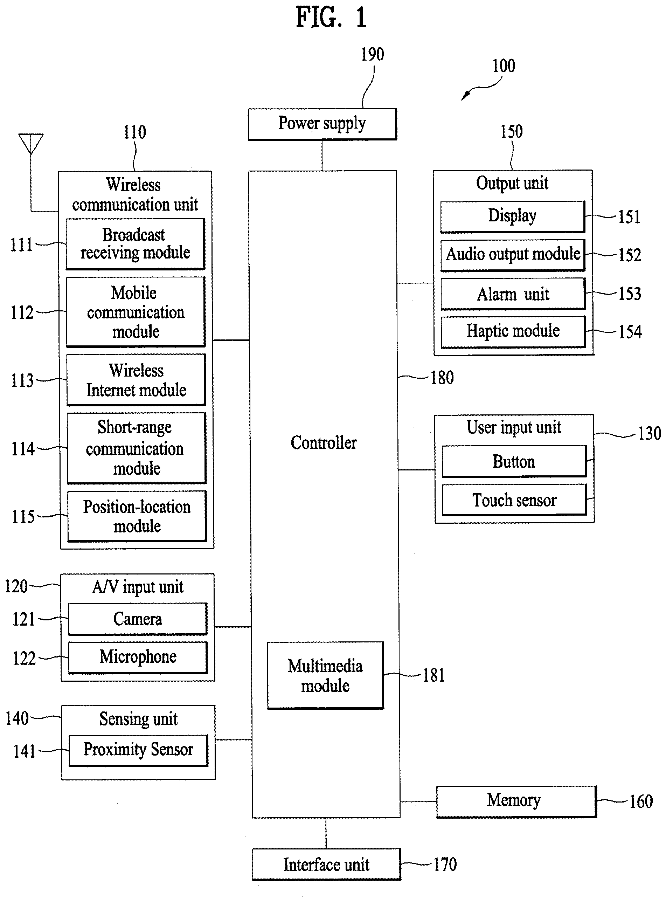

FIG. 1 is a block diagram of a mobile terminal 100 in accordance with an embodiment of the present invention. With reference to FIG. 1, the mobile terminal 100 includes a wireless communication unit 110, an A/V (audio/video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. More or fewer components may be implemented according to various embodiments.

The wireless communication unit 110 typically includes one or more components which permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, and a position-location module 115.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided in the mobile terminal 100 to facilitate simultaneous reception of at least two broadcast channels or broadcast channel switching.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H).

The broadcast receiving module 111 may be configured to receive broadcast signals transmitted from various types of broadcast systems. By nonlimiting example, such broadcasting systems may include digital multimedia broadcasting-terrestrial (DMB-T), digital multimedia broadcasting-satellite (DMB-S), digital video broadcast-handheld (DVB-H), digital video broadcast-convergence of broadcasting and mobile services (DVB-CBMS), Open Mobile Alliance Broadcast (OMA-BCAST), the data broadcasting system known as media forward link only (MediaFLO™) and integrated services digital broadcast-terrestrial (ISDB-T). Optionally, the broadcast receiving module 111 can be configured to be suitable for other broadcasting systems as well as the above-noted digital broadcasting systems.

The broadcast signal and/or broadcast associated information received by the broadcast receiving module 111 may be stored in a suitable device, such as the memory 160.

The mobile communication module 112 transmits/receives wireless signals to/from one or more network entities (e.g., a base station, an external terminal, and/or a server) via a mobile network such as GSM (Global System for Mobile communications), CDMA (Code Division Multiple Access), or WCDMA (Wideband CDMA). Such wireless signals may carry audio, video, and data according to text/multimedia messages.

The wireless Internet module 113 supports Internet access for the mobile terminal 100. This module may be internally or externally coupled to the mobile terminal 100. The wireless Internet technology can include WLAN (Wireless LAN), Wi-Fi™, Wibro™ (Wireless broadband), Wimax™ (World Interoperability for Microwave Access), HSDPA (High Speed Downlink Packet Access), GSM, CDMA, WCDMA, or LTE (Long Term Evolution) .

Wireless Internet access by Wibro™, HSPDA, GSM, CDMA, WCDMA, or LTE is achieved via a mobile communication network. In this regard, the wireless Internet module 113 may be considered as being a kind of the mobile communication module 112 to perform the wireless Internet access via the mobile communication network.

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth™ and ZigBee™, to name a few.

The position-location module 115 identifies or otherwise obtains the location of the mobile terminal 100. According to one embodiment, this module may be implemented with a global positioning system (GPS) module. The GPS module 115 is able to precisely calculate current 3-dimensional position information based on at least longitude, latitude or altitude and direction (or orientation) by calculating distance information and precise time information from at least three satellites and then applying triangulation to the calculated information. Location information and time information are calculated using three satellites, and errors of the calculated location position and time information are then amended (or corrected) using another satellite. In addition, the GPS module 115 is able to calculate speed information by continuously calculating a real-time current location.

With continued reference to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Furthermore, the processed image frames can be displayed on the display 151.

The image frames processed by the camera 121 can be stored in the memory 160 or can be transmitted to an external recipient via the wireless communication unit 110. Optionally, at least two cameras 121 can be provided in the mobile terminal 100 according to the environment of usage.

The microphone 122 receives an external audio signal while the portable device is in a particular mode, such as phone call mode, recording mode and voice recognition. This audio signal is processed and converted into electronic audio data. The processed audio data is transformed into a format transmittable to a mobile communication base station via the mobile communication module 112 in a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, and a jog switch.

The sensing unit 140 provides sensing signals for controlling operations of the mobile terminal 100 using status measurements of various aspects of the mobile terminal. For instance, the sensing unit 140 may detect an open/closed status of the mobile terminal 100, the relative positioning of components (e.g., a display and keypad) of the mobile terminal 100, a change of position (or location) of the mobile terminal 100 or a component of the mobile terminal 100, a presence or absence of user contact with the mobile terminal 100, and an orientation or acceleration/deceleration of the mobile terminal 100. As an example, a mobile terminal 100 configured as a slide-type mobile terminal is considered. In this configuration, the sensing unit 140 may sense whether a sliding portion of the mobile terminal is open or closed. According to other examples, the sensing unit 140 senses the presence or absence of power provided by the power supply unit 190, and the presence or absence of a coupling or other connection between the interface unit 170 and an external device. According to one embodiment, the sensing unit 140 can include a proximity sensor 141.

The output unit 150 generates output relevant to the senses of sight, hearing, and touch. Furthermore, the output unit 150 includes the display 151, an audio output module 152, an alarm unit 153, a haptic module 154, and a projector module.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can be implemented in a transparent or optical transmittive type, i.e., a transparent display. A representative example of the transparent display is the TOLED (transparent OLED). A rear configuration of the display 151 can be implemented as the optical transmittive type as well. In this configuration, a user may be able to see an object located at the rear of a terminal body on a portion of the display 151 of the terminal body.

At least two displays 151 can be provided in the mobile terminal 100 in accordance with one embodiment of the mobile terminal 100. For instance, a plurality of displays can be arranged to be spaced apart from each other or to form a single body on a single face of the mobile terminal 100. Alternatively, a plurality of displays can be arranged on different faces of the mobile terminal 100.

If the display 151 and a sensor for detecting a touch action (hereinafter called 'touch sensor') are configured as a mutual layer structure (hereinafter called 'touchscreen'), the display 151 is usable as an input device as well as an output device. In this case, the touch sensor can be configured as a touch film, a touch sheet, or a touchpad.

The touch sensor can be configured to convert pressure applied to a specific portion of the display 151 or a variation of capacitance generated from a specific portion of the display 151 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 180. Therefore, the controller 180 is made aware when a prescribed portion of the display 151 is touched.

Referring to FIG. 1, a proximity sensor 141 can be provided at an internal area of the mobile terminal 100 enclosed by the touchscreen or around the touchscreen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 141 is more durable than a contact type sensor and also has utility broader than the contact type sensor.

The proximity sensor 141 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touchscreen includes the electrostatic capacity proximity sensor, it is configured to detect the proximity of a pointer using a variation of an electric field according to the proximity of the pointer. In this configuration, the touchscreen (touch sensor) can be considered as the proximity sensor.

For clarity and convenience of explanation, an action for enabling the pointer approaching the touchscreen to be recognized as placed on the touchscreen may be named 'proximity touch' and an action of enabling the pointer to actually come into contact with the touchscreen may be named 'contact touch'. And, a position, at which the proximity touch is made to the touchscreen using the pointer, may mean a position of the pointer vertically corresponding to the touchscreen when the pointer makes the proximity touch.

The proximity sensor detects a proximity touch and a proximity touch pattern (e.g., a proximity touch distance, a proximity touch duration, a proximity touch position, a proximity touch shift state). Information corresponding to the detected proximity touch action and the detected proximity touch pattern can be output to the touchscreen.

The audio output module 152 functions in various modes including a call-receiving mode, a call-placing mode, a recording mode, a voice recognition mode, and a broadcast reception mode to output audio data which is received from the wireless communication unit 110 or is stored in the memory 160. During operation, the audio output module 152 outputs audio relating to a particular function (e.g., call received, message received). The audio output module 152 may be implemented using one or more speakers, buzzers, other audio producing devices, and combinations of these devices.

The alarm unit 153 outputs a signal for announcing the occurrence of a particular event associated with the mobile terminal 100. Typical events include a call received, a message received and a touch input received. The alarm unit 153 is able to output a signal for announcing the event occurrence by way of vibration as well as video or audio signal. The video or audio signal can be output via the display 151 or the audio output module 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. The strength and pattern of the vibration generated by the haptic module 154
are controllable. For instance, different vibrations can be output in a manner of being synthesized together or can be output in sequence.

The haptic module 154 is able to generate various tactile effects as well as the vibration. For instance, the haptic module 154 may generate an effect attributed to the arrangement of pins vertically moving against a contact skin surface, an effect attributed to the injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 154 can be implemented to enable a user to sense the tactile effect through a muscle sense of a finger or an arm as well as to transfer the tactile effect through direct contact. Optionally, at least two haptic modules 154 can be provided in the mobile terminal 100 in accordance with an embodiment of the mobile terminal 100.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), and moving pictures. Furthermore, a recent use history or a cumulative use frequency of each data (e.g., use frequency for each phonebook, each message or each multimedia file) can be stored in the memory 160.

Moreover, data for various patterns of vibration and/or sound output in response to a touch input to the touchscreen can be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory or XD memory), or other similar memory or data storage device. Furthermore, the mobile terminal 100 is able to operate in association with a web storage for performing a storage function of the memory 160 on the Internet.

The interface unit 170 may be implemented to couple the mobile terminal 100 with external devices. The interface unit 170 receives data from the external devices or is supplied with power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the mobile terminal 100 and can include a User Identify Module (UIM), a Subscriber Identity Module (SIM), and/or a Universal Subscriber Identity Module (USIM). A device having the identity module (hereinafter called 'identity device') can be manufactured as a smart card. Therefore, the identity device is connectible to the mobile terminal 100 via the corresponding port.

When the mobile terminal 100 is connected to an external cradle, the interface unit 170 becomes a passage for supplying the mobile terminal 100 with a power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, and video calls. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by various components of the mobile terminal 100. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which performs one or more of the functions and operations described herein. The software codes can be implemented with a software application written in any suitable programming language and may be stored in memory such as the memory 160, and executed by a controller or processor, such as the controller 180.

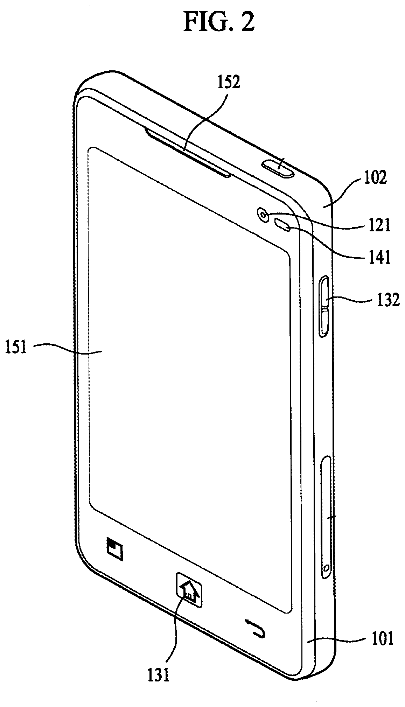

FIG. 2 is a front perspective view of a mobile terminal according to one embodiment of the present invention.

The mobile terminal 100 illustrated in FIG. 2 has a bar type terminal body. However, the mobile terminal 100 may be implemented in a variety of different configurations. Examples of such configurations include folder-type, slide-type, rotational-type, swing-type and combinations thereof. For ease of description, the following disclosure will primarily relate to a bar-type mobile terminal 100. However, it is understood that such disclosure may apply equally to other types of mobile terminals.

Referring to FIG. 2, the mobile terminal 100 includes a case (a casing, housing, or cover) constituting an exterior of the mobile terminal. In the present embodiment, the case can be divided into a front case 101 and a rear case 102. Various electric/electronic parts are loaded in a space (volume) provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output module 152, a camera 121, manipulating units 131 and 132, a microphone 122, and an interface unit 170 can be provided at the terminal body, and more particularly, at the front case 101. Manipulating units 131 and 132 are part of the user input unit 130.

The display 151 occupies most of a main face of the front case 101. The audio output module 152 and the camera 121 are provided at an area adjacent to an end portion of the display 151, while the manipulating unit 131 and the microphone 122 are provided at an area adjacent to the other end portion of the display 151. The manipulating unit 132 and the interface unit 170 can be provided at lateral sides of the front and rear cases 101 and 102.

The user input unit 130 is manipulated (operated) to receive a command for controlling an operation of the terminal 100. Furthermore, the user input unit 130 may include a plurality of manipulating units 131 and 132. The manipulating units 131 and 132 can be referred to as a manipulating portion and may adopt any tactile mechanism that enables a user to perform a manipulation action by touch.

Content input by manipulating units 131 and 132 can be divided between the two. For instance, a command such as start, end, and scroll is input to first manipulating unit 131. Furthermore, a command for a volume adjustment of sound output from the audio output module 152, or a command for a switching to a touch recognizing mode of the display 151 can be input to second manipulating unit 132.

Meanwhile, such a graphic for pointing at a specific object on a display unit or selecting a menu from the display unit as an arrow, a finger and the like is called a pointer or a cursor. Yet, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

For clarity and convenience of the following description, a mobile terminal mentioned in the following description is assumed as including at least one of the components shown in FIG. 1.

### Camera Structure

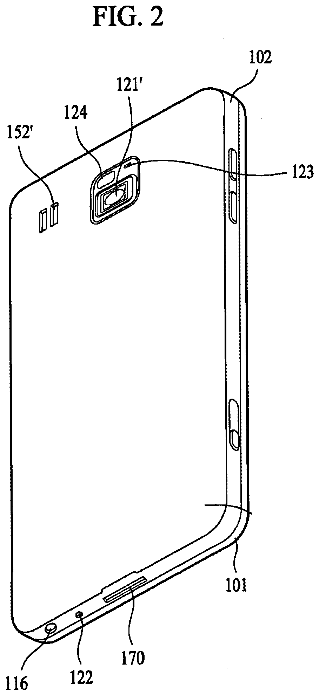

In the following description, how to provide a camera to a mobile terminal applicable to embodiments of the present invention is described with reference to FIGs. 3A to 4C.

FIG. 3A is a rear perspective diagram of the mobile terminal shown in FIG. 2.

Referring to FIG. 3A, a camera 121' can be additionally provided to a backside of the terminal body, and more particularly, to the rear case 102. A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124. An additional audio output unit 152' can be provided to the backside of the terminal body. The additional audio output unit 152' is able to implement a stereo function together with the former audio output unit 152 shown in FIG. 2 and may be used for implementation of a speakerphone mode in talking over the terminal. A broadcast signal receiving antenna 116 can be additionally provided to the lateral side of the terminal body as well as an antenna for communication or the like. The antenna 114 constructing a portion of the broadcast receiving module 111 shown in FIG. 1 can be retractably provided to the terminal body.

In this case, the camera 121' has a photographing direction that is substantially opposite to that of the former camera 121 shown in FIG. 2 and may have pixels equal to or different from those of the former camera 121. For instance, the former camera 121 has low pixels enough to capture and transmit a picture of user's face for a video call, while the latter camera 121' preferably has high pixels for capturing a general subject for photography without transmitting the captured subject immediately. And, each of the cameras 121 and 121' can be installed on the terminal body to be rotated or popped up.

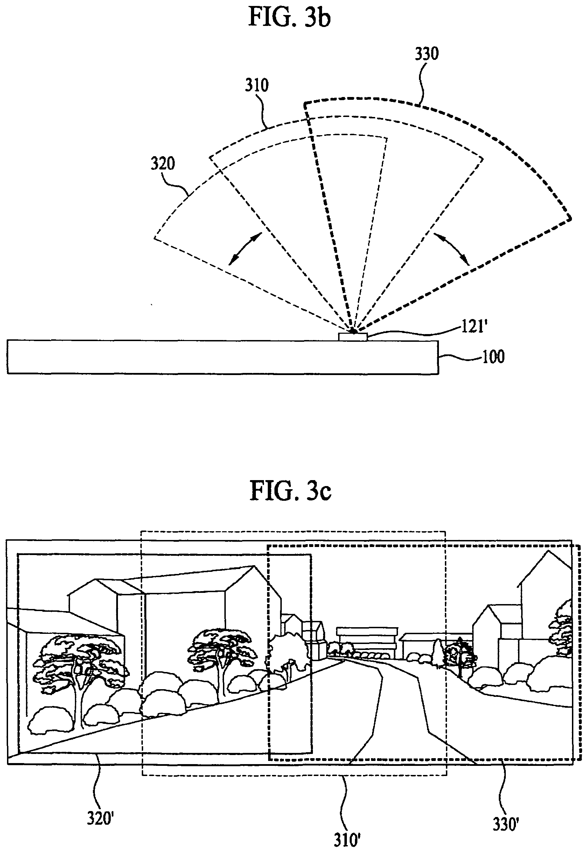

The camera 121' can be provided with a mechanical means for changing a facing direction of the camera 121' to be rotationally movable in top-to-bottom and/or right-to-left directions at least under the control of the controller 180. Hence, one example of changing a facing direction of the camera 121', i.e., a photographing range is shown in FIG. 3B.

FIG. 3B is a diagram for one example of changing an angle of view depending on a rotation of a camera along one rotational axis according to one embodiment of the present invention.

Referring to FIG. 3B, a shape of the mobile terminal 100 in a lateral view is schematically illustrated. In this case, assume that the camera 121' provided to a backside of the mobile terminal 100 can be rotated in a predetermined range on a horizontal axis. As the camera 121' faces a front direction in default state, a predetermined range 310 in front of the mobile terminal 100 can be photographed. If the camera 121' is rotated in a left direction, a predetermined range 320 covering a left side more than that of the default can be photographed. If the camera 121' is rotated in a right direction, a predetermined range 330 covering a right side more than that of the default can be photographed. In this case, a size of a view angle is exemplary and may differ depending on a camera lens configuration. If the camera 121' includes a zoom lens, a size of a view angle can be flexibly changed depending on a focal distance.

FIG. 3C is a diagram for one example of changing a photographing range depending on a view angle change shown in FIG. 3B.

Referring to FIG. 3C, if the camera of the mobile terminal is in default state, an image 310' in a predetermined range can be photographed. If the camera is rotated in a left direction, it is able to photograph a left image 320' centering on a front size of the mobile terminal. If the camera is rotated in a right direction, it is able to photograph a right image 330' centering on a front size of the mobile terminal.

A case of using two cameras is described as follows.

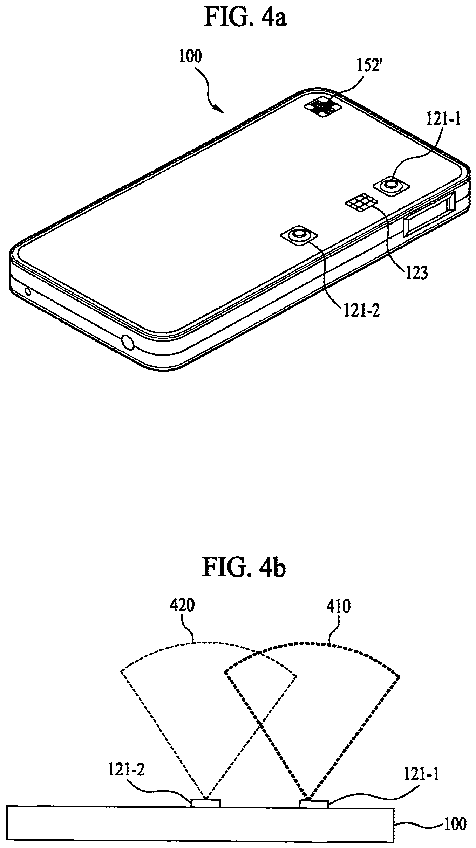

FIG. 4A is a rear perspective diagram of a mobile terminal having two rear cameras.

Referring to FIG. 4a, two rear cameras 121-1 and 121-2 can be arranged on the mobile terminal 100. One example of a photographing range of each camera in accordance with an arranged space between the two rear cameras 121-1 and 121-2 is shown in FIG. 4B.

FIG. 4B is a diagram for one example of view angles of the two rear cameras according to one embodiment of the present invention.

Referring to FIG. 4B, a shape of the mobile terminal 100 in a lateral view is schematically illustrated. In this case, a view angle 410 of the right camera 121-1 of the mobile terminal 100 and a view angle 420 of the left camera 121-2 of the mobile terminal 100 can be arranged in a manner of overlapping each other in part.

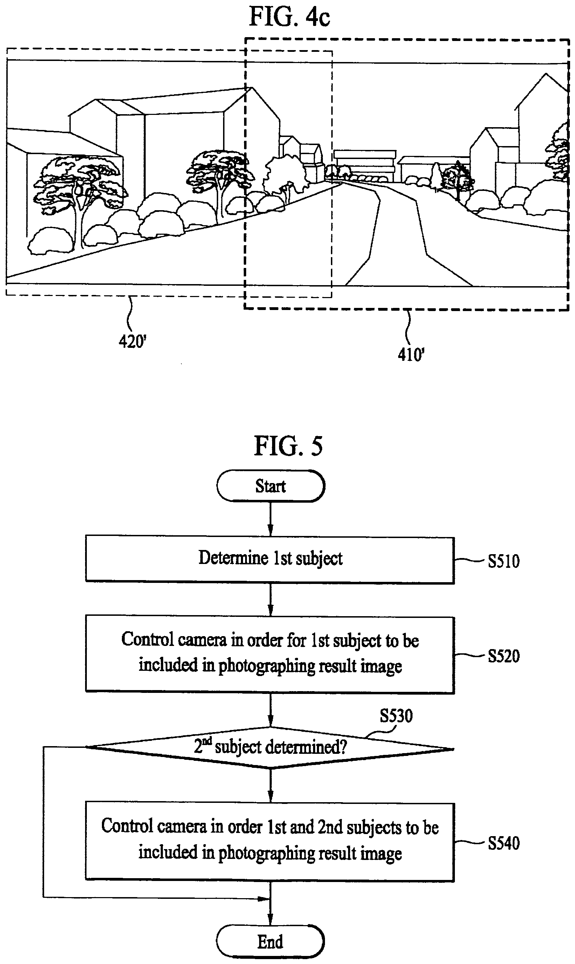

FIG. 4C is a diagram for one example of a real photographing range depending on the camera deployment shown in FIG. 4B.

Referring to FIG. 4C, as the view angle of the right camera 121-1 of the mobile terminal 100 and the view angle of the left camera 121-2 of the mobile terminal 100 overlap each other in part, an image 410' photographed through the right camera 121-1 and an image 420' photographed through the left camera 121-2 may overlap each other. Of course, one of the two rear cameras shown in FIG. 4A can be configured to be rotatable on at least one rotational axis under the control of the controller 180 like the camera shown in FIG. 3A. In this case, a wider photographing range can be provided.

Owing to the aforementioned camera configuration, it is able to photograph a range wider than that of a general mobile terminal having a single camera of a fixed type. The controller 180 of the mobile terminal 100 according to the present invention can display/save a whole image photographed through the aforementioned camera configuration as a preview image. And, the controller 180 of the mobile terminal 100 according to the present invention can display/save a predetermined part of the whole image as a preview image.

### Continuous Photographing of Photography Desired Subject

When a photography desired subject is photographed through a general mobile terminal, and more particularly, when a video is taken using the general mobile terminal, a user should continuously watch a preview image displayed on the display 151 of the mobile terminal by holding the mobile terminal so that the photography desired subject can stay in a preview image. In doing so, the user may experience inconvenience and difficulty in viewing the photography desired subject correctly with the naked eyes.

Therefore, in a method according to one embodiment of the present invention, a photography desired subject is determined using the camera mentioned in the foregoing description and the determined subject is continuously photographed irrespective of a motion of the mobile terminal or a motion of the subject. In the following description, assume that a photographing includes a video shooting.

FIG. 5 is a flowchart for one example of a process for continuously photographing a photography desired subject in a mobile terminal according to one embodiment of the present invention.

Referring to FIG. 5, as a mode for a continuous shooting is activated, a 1^{st} subject can be determined [S510]. In this case, the mode for the continuous shooting can be activated by a prescribed menu manipulation or a key button manipulation while a camera application is running. Alternatively, the mode for the continuous shooting can be activated directly by running a dedicated application supportive of the present mode. Moreover, the determination of the 1^{st} subject can be made if a user selects the 1^{st} subject from a preview image through a direct touch input. Alternatively, the determination of the 1^{st} subject can be made if the controller 180 determines use's eyes in a user's image taken through the front camera 121. Alternatively, the controller 180 automatically determines a subject that meets a prescribed reference in the preview image.

If the 1^{st} subject is determined, the controller 180 can control the 1^{st} subject to be included in a photographing result image by controlling the rear camera described with reference to FIG. 3A and FIG. 4A [S520]. In this case, the photographing result image may mean an image displayed through a preview image in the course of photographing or an image finally saved in the memory 160. To this end, if the camera shown in FIG. 3A is employed, the controller 180 can rotate the camera in a direction corresponding to a motion of the 1^{st} subject or a direction cancelling out a motion of the mobile terminal body. If a plurality of the cameras shown in FIG. 4A are employed, an image taken through the camera closer to the 1^{st} subject can be used as the photographing result image in consideration of a location of the 1^{st} subject relative to the mobile terminal depending on a motion of the 1^{st} subject or a motion of the mobile terminal body. Of course, if the 1^{st} subject is present at a location at which the view angles of the two cameras overlap each other, it is able to create a single photographing result image by synthesizing images taken through the two cameras together. Once the 1^{st} subject is designated by one of the above-mentioned methods, if the 1^{st} subject exists in a view angle range covered by the rear camera despite that a user does not move the mobile terminal along the 1^{st} subject while watching the preview image continuously, the 1^{st} subject can be continuously photographed.

Meanwhile, a 2^{nd} subject may be determined in response to a user's command input or a determination made by the controller 180 [S530].

If so, the controller 180 can control the camera so that both of the 1^{st} subject and the 2^{nd} subject can be included in the photographing result image [S540]. To this end, if the camera shown in FIG. 3A is employed, the controller 180 can rotate the camera so that both of the 1^{st} and 2^{nd} subjects can enter a view angle. If the two cameras shown in FIG. 4A are configured to be rotatable respectively, the controller 180 can control the two cameras to be rotated toward the 1^{st} subject and the 2^{nd} subject, respectively.

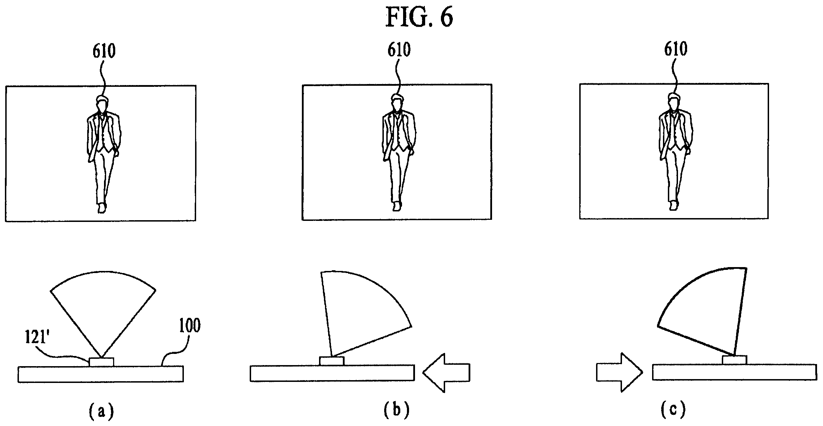

In the following description, a method for the controller 180 to control a rear camera in order for a 1^{st} subject to be included in a photographing result image is explained in detail with reference to FIG. 6.

FIG. 6 is a diagram for one example of types of controlling a camera depending on a motion of a mobile terminal in the mobile terminal according to one embodiment of the present invention.

In FIG. 6, assume that the camera shown in FIG. 3A is employed. Referring to FIG. 6 (a), in case that a determined subject 610 is located in front of a rear camera 121', the controller 180 can perform a photographing in default state. Yet, in case that the mobile terminal is shifted in a left direction due to a prescribed event (e.g., a user's motion, a user's hand instability, etc.), as shown in FIG. 6 (b), the controller 180 rotates the camera in a right direction so that the subject 610 can be continuously photographed. In doing so, the determination of the motion of the terminal can be made through the gyro sensor 140 or a location change of the subject in a preview image. On the other hand, if the mobile terminal is shifted in a right direction, as shown in FIG. 6(c), the controller 180 rotates the camera in a left direction so that the subject 610 can be continuously photographed.

The description with reference to FIG. 6 is made with reference to a horizontal movement of the mobile terminal for example. Moreover, in case that the determined subject moves, the controller 180 rotates the camera in a subject moving direction so that the moving subject can be continuously photographed. Moreover, in the description with reference to FIG. 6, the camera is rotated in a horizontal direction in response to a horizontal movement of the subject for example. Moreover, if the camera is rotated in a vertical direction, the mobile terminal is moved in the vertical direction, or the subject moves in the vertical direction, the subject can be continuously photographed.

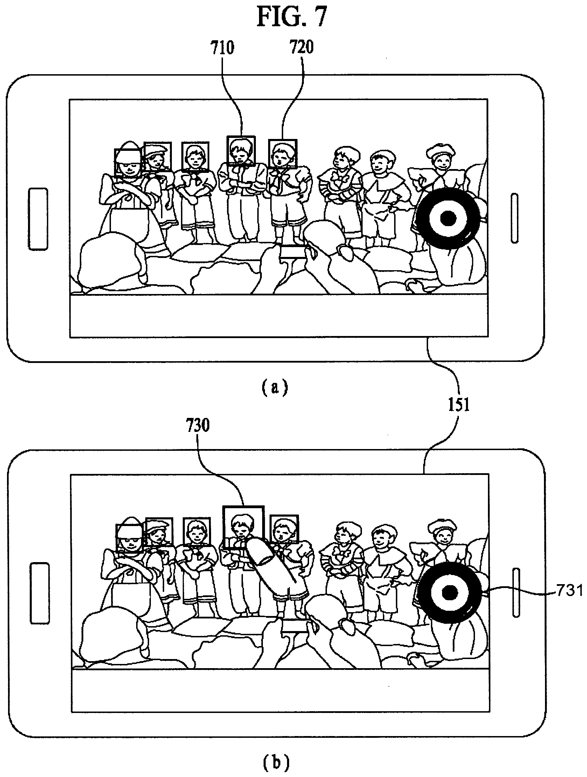

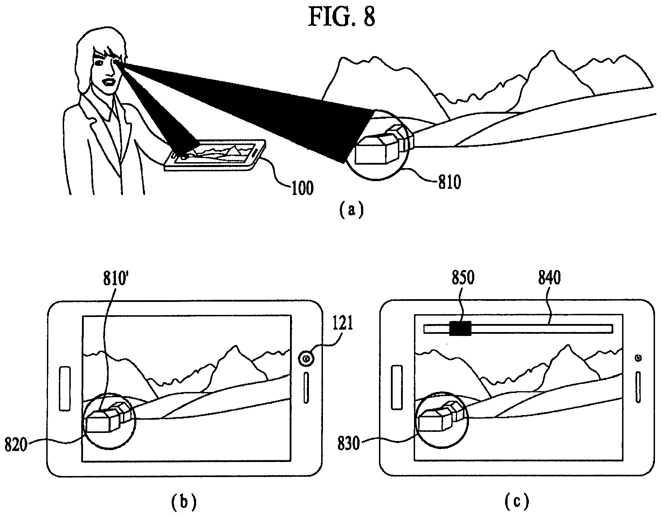

In the following description, a process for selecting a subject is explained with reference to FIG. 7 and FIG. 8.

FIG. 7 is a diagram for one example of a process for selecting a subject through face recognition in a mobile terminal according to one embodiment of the present invention.

Referring to FIG. 7, as a mode for a continuous photographing is activated, a preview image is displayed on the touchscreen 151. In doing so, the controller 180 determines a presence or non-presence of faces in the preview image and is then able to control prescribed visual effects 710 and 720 to be displayed on the regions determined as the faces, respectively [FIG. 7 (a)]. If a user selects the visual effect 710 corresponding to a specific character from the prescribed visual effects, a visual effect 730 indicating that the corresponding character is selected as a subject can be given [FIG. 7 (b)]. Thereafter, if the user touches a record button 731, the camera can be controlled so that the character selected as the subject can be continuously photographed by the method mentioned in the foregoing description.

FIG. 8 is a diagram for one example of a process for selecting a subject through user's eye tracking in a mobile terminal according to one embodiment of the present invention.

Referring to FIG. 8 (a), in case that a user intends to photograph a subject 810 normally, a process for checking a preview image displayed through the mobile terminal is performed once at least. Hence, if user's eyes photographed through the front camera 121 face outside the mobile terminal, the controller 180 can determine that the subject 810 is searched with the naked eyes. If the user's eyes stay in a touchscreen direction, the controller 180 may determine that the user is checking the preview image.

When the user's eyes stay in the direction of the touchscreen 151, referring to FIG. 8 (b), the controller 180 determines a location (i.e., a photography desired subject displayed part 810') toward which the user's eyes photographed through the front camera 121 face in the preview image and is then able to give a visual effect 820 to the determined location. A location of the visual effect 820 may be changed by real time in response to a movement of the eyes. If the user keeps staring at a similar location in the preview image or selects a specific location from the preview image by a touch input, referring to FIG. 8 (c), a visual effect 830 can be displayed to indicate that the corresponding location is determined as a subject. If the user shakes user's head, the subject determination can be cancelled.

Meanwhile, an indicator 850 indicating a current view angle in a maximum photographing available view angle 840 can be displayed on the preview image. In this case, the maximum photographing available view angle means a range of a whole view angle available for a photographing when a camera is rotated from one lateral end to the other lateral end along a prescribed rotational axis. For instance, a reference number '320' shown in FIG. 3B indicates a view angle when the camera is rotated in a left direction as far as possible. And, a reference number '330' shown in FIG. 3B indicates a view angle when the
camera is rotated in a right direction as far as possible. In this case, the maximum photographing available view angle can range from a left end indicated by the reference number 320 to a right end indicated by the reference number 330. In FIG. 8 (c), a user is able to determine that the camera has been rotated in the left direction through the indicator 850. If the user's eyes determined through the front camera 121 stays in an edge direction of the touchscreen, the rear camera can be rotated in a direction of the user's eyes. In this case, a location of the indicator 850 can be changed in response to a rotation level of the camera. When the camera is rotated in response to the user's eyes, if the user's eyes face in a direction deviating from the maximum photographing available view angle, the controller 180 can warn the user using an output (e.g., vibration, warning sound, warning text, visual effect output, etc.) through the output unit.

Besides, zoom-in/out can be performed on a preview image depending on a distance between the mobile terminal and the user.

Since the maximum photographing available view angle mentioned in the above description is dependent on hardware property of the camera unless the user moves the mobile terminal, the maximum photographing available view angle can be regarded as a fixed value unless there is user's intervention. Hence, in case that a subject moves enough to get away from the maximum photographing available view angle, it may be difficult for the subject to be continuously photographed through the camera control according to the present invention. Of course, this problem may be caused by a motion of the mobile terminal moved by a user as well as by a movement of the subject.

Therefore, according to another aspect of one embodiment of the present invention, if a subject possibly gets away from a maximum photographing available view angle, it is proposed to inform a user of the possibility.

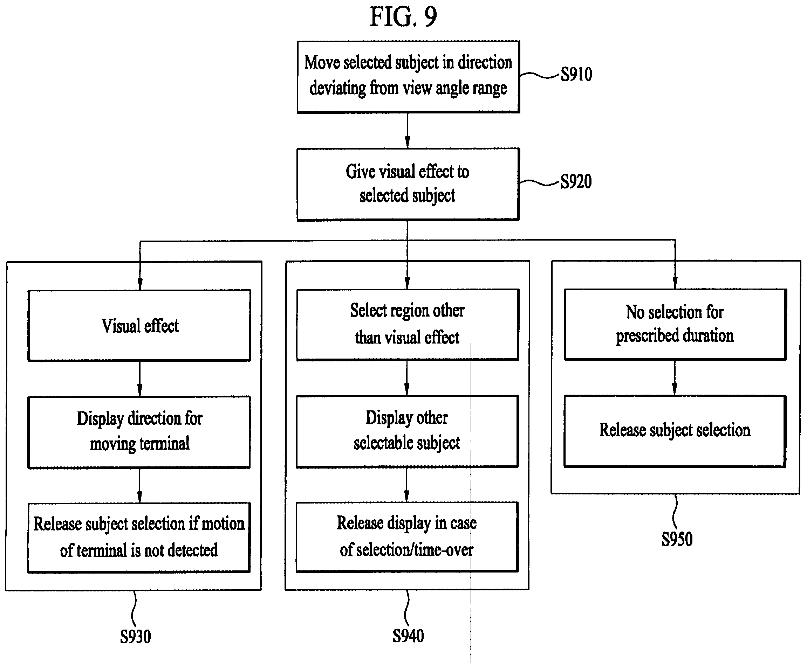

FIG. 9 is a flowchart for one example of an operating process in consideration of a subject and a maximum photographing available view angle in a mobile terminal according to another aspect of one embodiment of the present invention.

Referring to FIG. 9, if the controller 180 determines that a subject selected by one of the aforementioned methods moves in a direction deviating from a view angle, e.g., a maximum photographing available view angle [S910], a visual effect can be given to the selected subject [S920]. In this case, the given visual effect is preferably different from another visual effect indicating the selected subject, i.e., the subject becoming a tracking target of the camera. This is because the object of the visual effect is to warn a user of possibility of failure in tracking for a continuous photographing of the selected subject rather than to discriminate the selected subject from another subject.

After the visual effect has given to the selected subject, if a user selects the visual effect through a touch input, a direction for moving the mobile terminal can be displayed on the touchscreen in order for the subject to be continuously photographed (i.e., to stay in the maximum photographing available view angle). If a motion of the mobile terminal in the corresponding direction is not detected, the controller 180 can release the selection of the corresponding subject [S930]. In doing so, the moving direction of the mobile terminal can be determined through a gyro sensor or an acceleration sensor.

After the visual effect has been given, if the user selects a region to which the visual effect is not given, the controller 180 recognizes at least one different subject candidate existing within the maximum photographing available view angle and is then able to inform the user of the recognized subject candidate visually. If the user selects one of the at least one subject candidate, the controller 180 can change the subject into the selected subject candidate. In doing so, the visual effect for informing the user of the at least one subject candidate can be released. Of course, if the user does not select the subject candidate for preset duration, the corresponding visual effect can be released as well [S940].

Meanwhile, after the visual effect has been given to the selected subject, if the user does not apply any input for preset duration, the controller 180 can cancel the selection of the subject [S950].

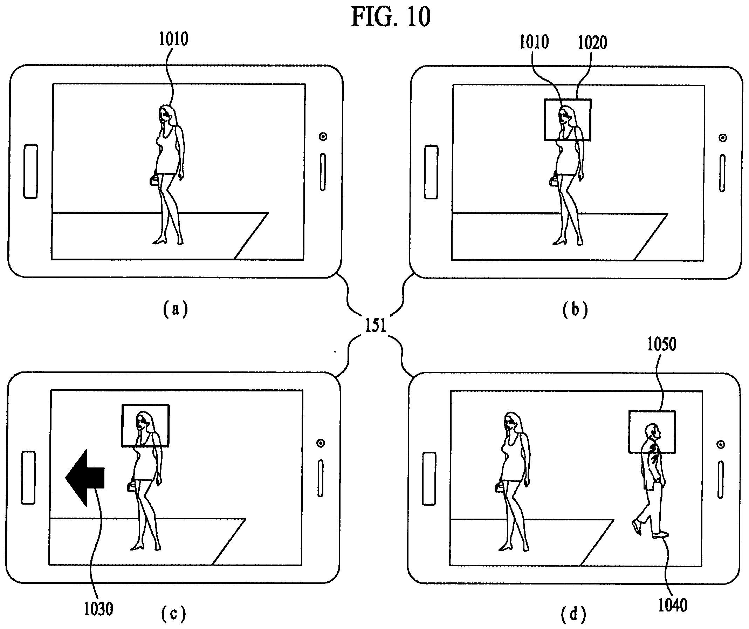

In the following description, an operating process of the above-described mobile terminal is explained in detail with reference to FIG. 10.

FIG. 10 is a diagram for one example of a visual effect displayed in consideration of a subject and a maximum photographing available view angle in a mobile terminal according to another aspect of one embodiment of the present invention.

Referring to FIG. 10 (a), as a person 1010 is selected as a subject in a mode for a continuous photographing, a preview image is currently displayed on the touchscreen. In doing so, if the controller 180 determines the possibility of deviation from a maximum photographing available view angle in a left direction, referring to FIG. 10 (b), a visual effect 1020 can be given to the corresponding subject 1010.

After the visual effect 1020 has been displayed, if a user selects the corresponding visual effect, referring to FIG. 10 (c), the controller 180 can control a direction 1030 for moving the mobile terminal, i.e., a left direction, to be displayed on the touchscreen. In doing so, if a motion of the mobile terminal in the left direction is not detected, as mentioned in the foregoing description, referring to FIG. 10 (d), the controller 180 determines a different subject candidate 1040 and is then able to give a visual effect 1050 indicating the determined subject candidate 1040. In particular, the controller 180 may determine a subject candidate through face recognition. Alternatively, the controller 180 may determine a part differing from a surrounding in color/contrast as a subject candidate. Alternatively, the controller 180 may determine a subject candidate using user's eyes.

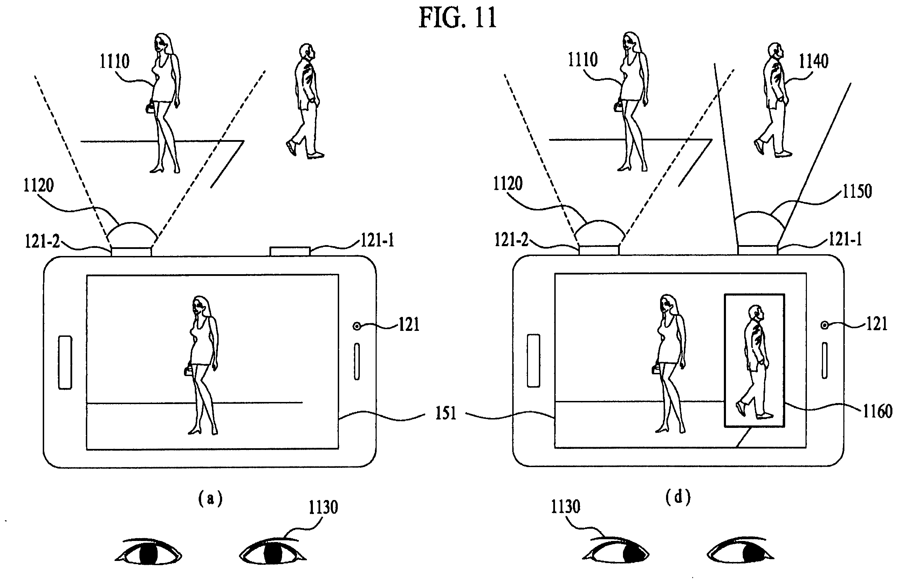

In the following description, a case of selecting two subjects according to further aspect of one embodiment of the present invention is explained in detail with reference to FIG. 11.

FIG. 11 is a diagram for one example of a method of continuously photographing two subjects by determining each of the subjects in a mobile terminal according to further aspect of one embodiment of the present invention.

In FIG. 11, assume that the two rear cameras shown in FIG. 4A are provided. And, assume that each of the two rear cameras is rotatable in right-left direction at least.

Referring to FIG. 11 (a), as a human 1110 is determined as a 1^{st} subject, a video shooting is currently performed within a view angle 120 of the left rear camera 121-2. In doing so, the controller 180 can recognize a user's eye direction 1130 through the front camera 121. If the user's eyes get away from the touchscreen and then move to a right side, as shown in FIG. 11 (b), the controller 180 activate the right rear camera 121-1, searches for a 2^{nd} subject 1140 located in the user's eye direction 1130, and controls the found 2^{nd} subject 1140 to be photographed through a view angle 1150 of the right rear camera 121-1. In this case, an image of the 2^{nd} subject 1140 can be displayed on a prescribed region 1160 of a preview image. Through this method, two subjects can be simultaneously included in a photographing result image and each camera can be rotated to enable a different subject to be continuously included in the photographing result image. The images photographed through the respective cameras can be separately saved or may be saved as a single video file. Moreover, the photographed images can be played in a following manner. First of all, the image of the 1^{st} subject is played only in the first place. While the image of the 1^{st} subject is played, if a timing point of the initiation of the photographing of the 2^{nd} subject arrives, the image of the 2^{nd} subject can be played automatically or in response to a user's selection. For instance, if a timing point of the initiation of the photographing of the 2^{nd} subject arrives, the controller 180 can control the image of the 2^{nd} subject to be automatically played in form of a popup window on a play region. Alternatively, the controller 180 controls an indication, which indicates a presence of the image of the 2^{nd} subject, to be displayed in the first place. Subsequently, if a user selects the indication, the controller can control the image of the 2^{nd} subject to be displayed together.

When a user stares at a different subject existing in a view angle 1120 of the left camera 121-2, if such staring is determined as an image photographed through the front camera 121, the controller 180 can control the different subject to be photographed through the right camera 121-1 by zooming in on the different subject. And, this zoom-in image can be displayed on a prescribed region of a preview image in a manner similar to that shown in FIG. 11 (b).

When two subjects are simultaneously photographed, it is a matter of course that a user can be informed of a presence or non-presence of deviation of a maximum photographing available view angle.

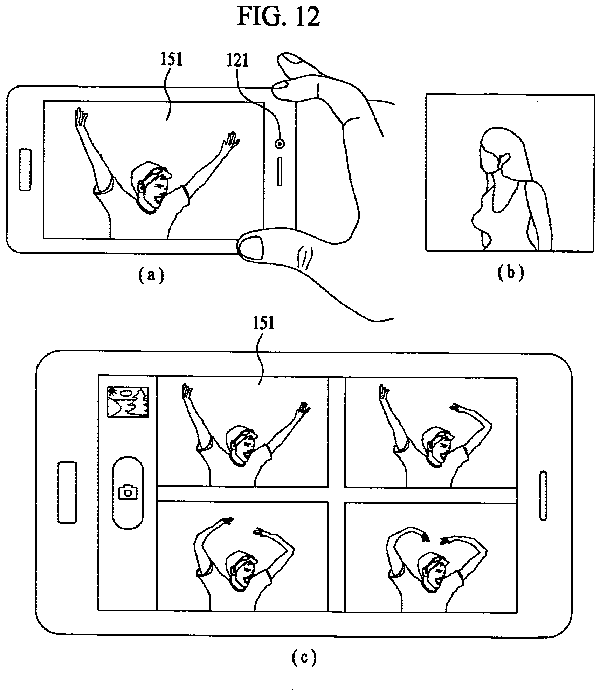

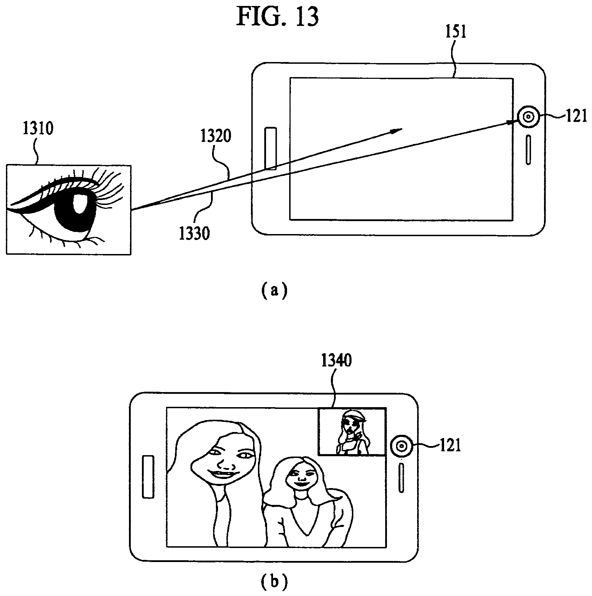

Meanwhile, according to another embodiment of the present invention, various kinds of convenience functions can be provided in response to a user's action change detected through the front camera 121. This is described in detail with reference to FIG. 12 and FIG. 13 as follows.

FIG. 12 is a diagram for one example of a type of performing an auto-photographing depending on a user's motion in a mobile terminal according to another embodiment of the present invention.

Referring to FIG. 12 (a), as a camera photographing mode is activated in the mobile terminal, a preview image taken through the rear camera is displayed on the touchscreen 151. In doing so, the controller 180 can determine a presence or non-presence of a user's action change through the front camera 121. While the preview image is displayed, if the user watches a direction different from a front side, e.g., if the user turns his head, as shown in FIG. 12 (b), the controller 180 can automatically perform a photographing in a prescribed interval while the user is watching a different direction. Thereafter, if the user stares at the front side (or the touchscreen) again, referring to FIG. 12 (c), the controller 180 can control an image, which is taken while the user watches the different direction, to be displayed on the touchscreen. Through this, it is able to compensate for a shutter timing that may be missed by the user due to an external interruption or user's distraction. On the other hand, while a video is taken, if user's eyes are turned outside the touchscreen or a camera's view angle, the controller can pause the video shooting during the corresponding time.

In the following description, a method of solving problems caused in performing a self-photographing is explained in detail with reference to FIG. 13.

FIG. 13 is a diagram for another example of a type of performing an auto-photographing depending on a user's motion in a mobile terminal according to another embodiment of the present invention.

Referring to FIG. 13 (a), when a self-photographing is normally performed, a user fixes his eyes 1320 on the touchscreen to check his appearance through a preview image. Yet, since the front camera 121 is provided to an edge of the touchscreen, if a shutter button is selected in this situation, an image is taken as if user's eyes 1310 do not stare at the front side. Therefore, according to the present invention, it is proposed that a photographing is automatically performed the moment a user fixes his eyes 1330 to the camera. To this end, the controller 180 determines a user's eye change in the preview image photographed through the front camera 121. If the user's eyes 1330 are determined to face the camera, the controller 180 can control the photographing to be performed. Moreover, referring to FIG. 13 (b), although the photographing is performed through the rear camera, if user's eyes are determined as facing the front camera 121, the controller 180 performs the photographing through the front camera and is then able to control a result image to be displayed on a prescribed region 1340 of the preview image. Thus, the image taken through the front camera can be recorded as a single image file by being merged with the image taken through the rear camera, or may be recorded as an image file separate from the image taken through the rear camera.

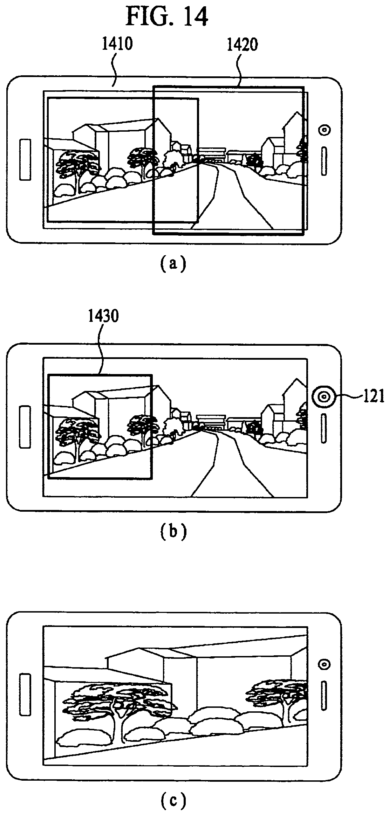

In the following description, functions, which can be provided when a video taken by one of the aforementioned methods, are explained in detail with reference to FIGs. 14 to 18.

FIG. 14 is a diagram for one example of a type of playing a video in a mobile terminal according to one embodiment of the present invention.

In FIG. 14, assume that a video is taken through the camera shown in FIG. 4A. And, assume that images taken through cameras are created as a single file configuring a non-overlapping view angle. Referring to FIG. 14 (a), as a video play starts, visual effects 1410 and 1420, each of which indicates that a prescribed part of an image is taken through a prescribed camera, can be displayed. In doing so, if determining that user's eyes determined through the front camera 121 face a prescribed left region, the controller 180 gives a prescribed visual effect 1430 to the corresponding region. If the eyes keep maintained, referring to FIG. 14 (b), zoom-in can be performed on the corresponding region.

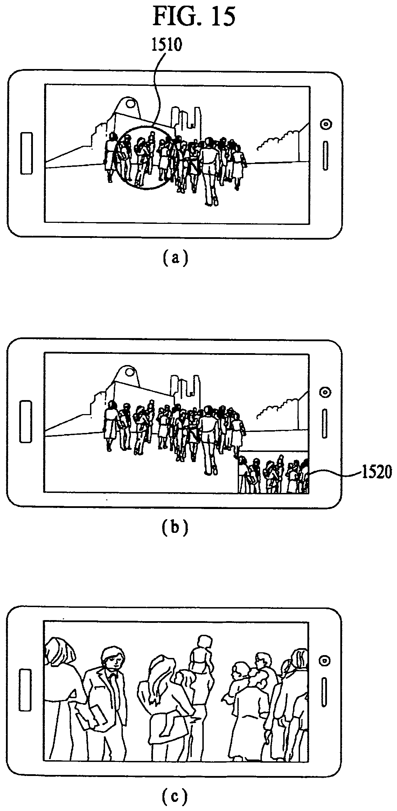

Meanwhile, in case that a plurality of characters are included in a video, the controller 180 determines a presence or non-presence of the same character in images saved in the memory 160 and a frequency of appearance of each character and is then able to perform zoom-in on the character having the high frequency. This is described in detail with reference to FIG. 15 as follows.

FIG. 15 is a diagram for another example of a type of playing a video in a mobile terminal according to one embodiment of the present invention.

Referring to FIG. 15 (a), the controller 180 can give a prescribed visual effect 1510 to a region, in which a character determined as having the highest appearance frequency among images saved in the memory 160 is located, among characters included in a video. On the other hand, referring to FIG. 15 (b), a sub-paly region 1520 is separately displayed on a prescribed region of a played screen and an image including the character having the highest appearance frequency can be displayed through the sub-play region 1520 by zoom-in. In doing so, if a user selects the visual effect 1510 through a touch input or the sub-play region 1520, referring to FIG. 15 (c), the zoom-in image can be displayed as a full screen centering on the corresponding character. Moreover, if the visual effect 1510 shown in FIG. 15 (a) is selected by a specific touch input (e.g., a long touch), the screen shown in FIG. 15 (b) can be displayed.

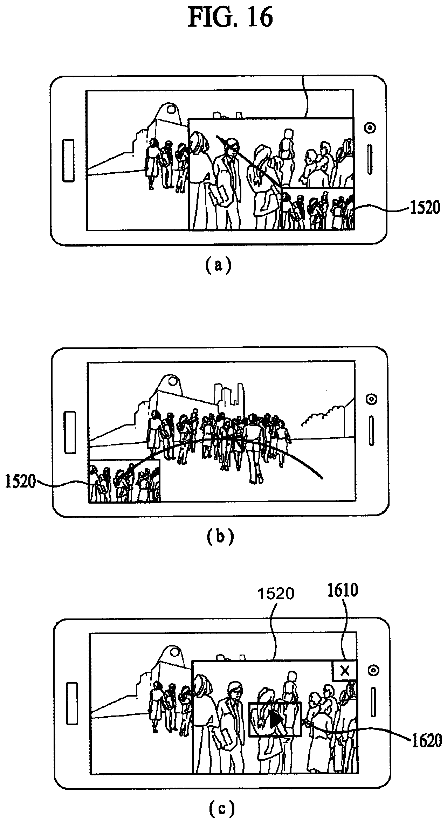

In the following description, a method of utilizing a sub-play region is explained in detail with reference to FIG. 16.

FIG. 16 is a diagram for one example of a type of modifying a sub-play region, moving the sub-play region, and playing a video through the modification and movement of the sub-play region in a mobile terminal according to one embodiment of the present invention.

Referring to FIG. 16 (a), if a touch-drag input in a left top end diagonal direction is detected from a left top end of a sub-play region 1520, the controller 180 can enlarge the sub-play region in proportion to a drag distance. Of course, if a direction of the touch-drag input is opposite to the former direction, the controller 180 can reduce the sub-play region.

If a user drags a region other than an edge of the sub-play region, referring to FIG. 16 (b), a location of the sub-play region 1520 can be changed in response to a drag distance and a drag direction.

Moreover, if necessary, referring to FIG. 16 (c), an end icon 1610 for making the sub-play region disappear and an icon 1620 for changing a play state of an image displayed on the sub-play region can be displayed in addition. Moreover, if a touch-drag input, which starts from an outside of the sub-play region and then ends inside the sub-play region, is detected, the controller 180 can control an inner sub-play region image and an outer sub-play region image to be displayed in a manner of switching their display regions to each other (i.e., an image displayed on the sub-play region is displayed on a full screen).

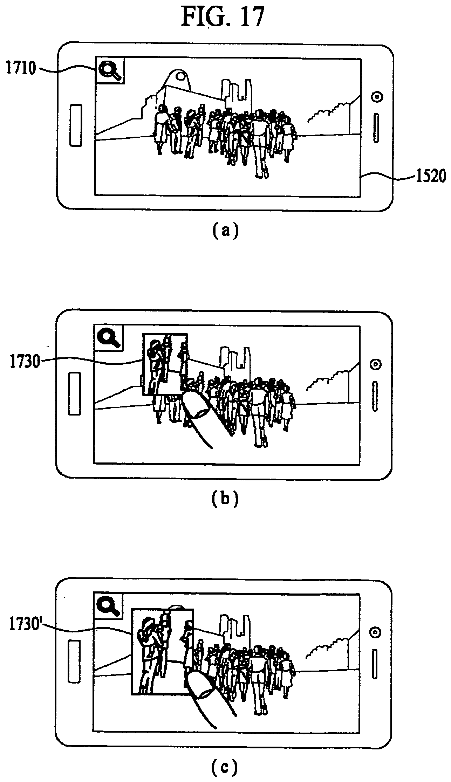

FIG. 17 is a diagram for one example of a method of zooming in on a specific part of a video in a mobile terminal according to one embodiment of the present invention.

Referring to FIG. 17 (a), when a video is played, a magnifier icon 1710 can be displayed on a prescribed region of the touchscreen automatically or in response to a prescribed menu manipulation. If a user touches the magnifier icon 1710 with a pointer 1720 and then touches a prescribed region of the video, referring to FIG. 17 (b), an image resulting from enlarging the touched region can be displayed nearby the pointer 1720. If the pointer keeps staying in the same region, referring to FIG. 17 (c), the controller can control the enlarged image 1730' to be displayed in a manner of being further enlarged. In the state shown in FIG. 17 (b) or FIG. 17 (c), if the user selects the magnifier icon 1720 again and then touches a different region, an image resulting from enlarging the touched different region can be displayed together with the initially enlarged and displayed image 1730 [not shown in the drawing]. Such an operation can be repeated at least three times.

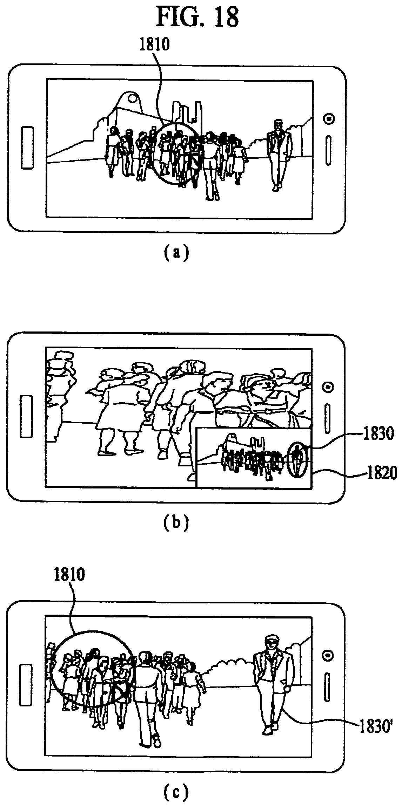

FIG. 18 is a diagram for one example of a method of changing a portion of a whole video displayed on a touchscreen in a mobile terminal according to one embodiment of the present invention.

Referring to FIG. 18 (a), while a video is played, if a user selects or staring at a center region 1810, zoom-in can be performed. Hence, referring to FIG. 18 (b), a sub-play region 1820 is created to display a whole video together with the zoom-in region. In doing so, if a region 1830 different from the current zoom-in region is selected from the sub-play region 1820 shown in FIG. 18 (b), referring to FIG. 18 (c), the controller 180 can change the zoom-in state so that both of the selected regions 1810 and 1830' to be displayed together.

Meanwhile, the controller 180 can save information on the per-playtime enlargement, reduction, sub-play region creation/adjustment/termination and display part changed history, which are described with reference to FIGs. 14 to 18, in the memory 160. When the corresponding is replayed, the controller 180 can control a previously performed history to be exactly repeated using the saved information. For instance, if a specific part is enlarged at a timing point of 1 minute 20 seconds in a previous play and the enlarged state is released at a timing point of 1 minute 30 seconds in the previous play, the specific part can be automatically enlarged at a timing point of 1 minute 20 seconds in a next play and the enlarged state can be released at a timing point of 1 minute 30 seconds in the next play.

It will be apparent to those skilled in the art that various modifications and variations can be specified into other form(s) without departing from the scope of the appended claims.

According to one embodiment of the present invention, the above-described methods can be implemented in a program recorded medium as processor-readable codes. The processor-readable media include all kinds of recording devices in which data readable by a processor are saved. The processor-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the scope of the appended claims. Thus, it is intended that the present invention covers the modifications and variations of this invention provided they come within the scope of the appended claims.

## Claims

1. A mobile terminal (100) comprising:
two cameras (121-1, 121-2) configured to obtain an image, wherein the two cameras are provided at a rear case of the mobile terminal and the two cameras comprise a first camera (121-1) and a second camera (121-2) separated by a predetermined space;
a touchscreen (151) configured to display the obtained image;
a sensing unit (140) configured to sense a movement of the mobile terminal; and
a controller (180) configured to:
- determine a first subject in the obtained image, and
- control activation in each of the two cameras according to a location of the first subject,
- control a view angle of each of the activated cameras according to the location of the first subject so as to continuously display, on the touchscreen, the first subject in a displayed photography result image; and
- obtain a preview image via a camera closer to the first subject among the two cameras in consideration of the location of the first subject relative to the mobile terminal based on the sensed movement of the mobile terminal.

2. The mobile terminal of claim 1, wherein the two cameras are rotatable about at least one rotational axis based on control by the controller (180), and the controller (180) is further configured to change the view angle by rotating the two cameras about the rotational axis.

3. The mobile terminal of claim 2, wherein:
- the controller (180) is further configured control the two cameras to rotate in a motion direction of the first subject; or
- the controller (180) is further configured to control the two cameras to rotate in a direction opposite a movement direction of the mobile terminal.

4. The mobile terminal of claim 1, wherein the controller (180) is configured to control either the first camera (121-1) or the second camera (121-2) to be activated based on a motion direction of the first subject.

5. The mobile terminal of claim 1, wherein:
the controller (180) is further configured to activate the first (121-1) or second camera (121-2) in a direction opposite the movement direction of the mobile terminal based on view angles of the first (121-1) and second cameras (121-2); or
- each of the first camera (121-1) and the second camera (121-2) is separately rotatable about a rotational axis based on control by the controller (180).

6. The mobile terminal of claim 1, further comprising a third camera (121) configured to photograph a user's image, wherein the third camera is provided on a front case (101) of the mobile terminal and the controller (180) is further configured to determine user's eyes based on the user's image and determines a subject corresponding to the determined eyes as the first subject.

7. The mobile terminal of any one of the preceding claims, wherein the controller (180) is further configured to:
- control a preview image obtained by the two cameras to be displayed on the touchscreen, and
- determine the first subject in response to a touch input to the preview image.

8. The mobile terminal of claim 7, wherein the controller (180) is configured to:
- perform face recognition on the preview image and provide a prescribed visual effect to at least one recognized face, and
- when one visual effect is selected, determine a subject corresponding to the selected visual effect as the first subject.

9. The mobile terminal of claim 1, wherein the controller is further configured to control, when the first subject moves in a direction deviating from a maximum photographing available view angle of the two cameras, a first visual effect to be provided in a region corresponding to the first subject in a preview image displayed on the touchscreen (151).

10. The mobile terminal of claim 9, wherein when the first visual effect is selected, the controller (180) is further configured to control a second visual effect corresponding to a moving direction of the first subject.

11. A method of controlling a mobile terminal (100), comprising:
obtaining an image by two cameras provided at a rear case (102) of the mobile terminal, wherein the two cameras comprise a first camera (121-1) and a second camera (121-2) separated by a predetermined space;
displaying, via a touchscreen (151) of the mobile terminal, the obtained image;
determining a first subject in the obtained image;
controlling activation of each of the two cameras according to a location of the first subject;
controlling a view angle of each of the activated cameras according to the location of the first subject so as to continuously display, on the touchscreen, the first subject in a displayed photography result image;
sensing, via a sensing unit (140) of the mobile terminal, a movement of the mobile terminal; and
obtaining a preview image via a camera closer to the first subject among the two cameras in consideration of the location of the first subject relative to the mobile terminal based on the sensed movement of the mobile terminal.

12. A computer-readable medium comprising code portions which, when executed on a processor, configure the processor to perform all steps of a method according to claim 11.

## Patentansprüche

1. Mobiles Endgerät (100), mit:
zwei zum Erhalten eines Bildes konfigurierten Kameras (121-1, 121-2), wobei die zwei Kameras an einem rückwärtigen Gehäuse des mobilen Endgeräts vorhanden sind und die zwei Kameras eine erste Kamera (121-1) und eine zweite Kamera (121-2) umfassen, die durch einen vorbestimmten Abstand getrennt sind,
einem Berührungsbildschirm (151), der dazu konfiguriert ist, das erhaltene Bild anzuzeigen,
einer Erfassungseinheit (140), die dazu konfiguriert ist, eine Bewegung des mobilen Endgeräts zu erfassen, und
einer Steuereinheit (180), die konfiguriert ist zum:
- Feststellen eines ersten Gegenstands in dem erhaltenen Bild, und
- Steuern einer Aktivierung jeder der zwei Kameras entsprechend einer Position des ersten Gegenstands,
- Steuern eines Bildwinkels jeder der aktivierten Kameras entsprechend der Position des ersten Gegenstands, um auf dem Berührungsbildschirm den ersten Gegenstand in einem dargestellten Fotografierergebnisbild fortwährend anzuzeigen, und
- Erhalten eines Vorschaubilds mittels einer Kamera, die unter den beiden Kameras unter Berücksichtigung der Position des ersten Gegenstands relativ zu dem mobilen Endgerät basierend auf der erfassten Bewegung des mobilen Endgeräts dem ersten Gegenstand näher ist.

2. Mobiles Endgerät nach Anspruch 1, wobei die zwei Kameras basierend auf einer Steuerung durch die Steuereinheit (180) um zumindest eine Rotationsachse drehbar sind und die Steuereinheit (180) ferner dazu konfiguriert ist, den Bildwinkel durch Drehen der zwei Kameras um die Rotationsachse zu ändern.

3. Mobiles Endgerät nach Anspruch 2, bei dem:
- die Steuereinheit (180) ferner dazu konfiguriert ist, die zwei Kameras zum Drehen in einer Bewegungsrichtung des ersten Gegenstands zu steuern, oder
- die Steuereinheit (180) ferner dazu konfiguriert ist, die zwei Kameras zum Drehen in einer Richtung entgegen einer Bewegungsrichtung des mobilen Endgeräts zu steuern.

4. Mobiles Endgerät nach Anspruch 1, wobei die Steuereinheit (180) dazu konfiguriert ist, entweder die erste Kamera (121-1) oder die zweite Kamera (121-2) zu steuern, basierend auf einer Bewegungsrichtung des ersten Gegenstands aktiviert zu werden.

5. Mobiles Endgerät nach Anspruch 1, bei dem:
die Steuereinheit (180) ferner dazu konfiguriert ist, die erste (121-1) oder zweite Kamera (121-2) in einer Richtung entgegen der Bewegungsrichtung des mobilen Endgeräts zu aktivieren basierend auf Bildwinkeln der ersten (121-1) und zweiten Kamera (121-2), oder
- sowohl die erste Kamera (121-1) als auch die zweite Kamera (121-2) basierend auf einer Steuerung durch die Steuereinheit (180) separat um eine Rotationsachse drehbar ist.

6. Mobiles Endgerät nach Anspruch 1, ferner aufweisend eine dritte Kamera (121), die zum Fotografieren des Bilds eines Benutzers konfiguriert ist, wobei die dritte Kamera auf einem frontseitigen Gehäuse (101) des mobilen Endgeräts vorhanden ist und die Steuereinheit (180) ferner dazu konfiguriert ist, basierend auf dem Bild des Benutzers die Augen des Benutzers zu ermitteln und einen den ermittelten Augen entsprechenden Gegenstand als den ersten Gegenstand festzulegen.

7. Mobiles Endgerät nach einem der vorhergehenden Ansprüche, wobei die Steuereinheit (180) ferner konfiguriert ist zum:
- Steuern eines von den zwei Kameras erhaltenen Vorschaubildes dahingehend, dass es auf dem Berührungsbildschirm angezeigt wird, und
- Ermitteln des ersten Gegenstands in Reaktion auf eine Berührungseingabe auf das Vorschaubild.

8. Mobiles Endgerät nach Anspruch 7, wobei die Steuereinheit (180) konfiguriert ist zum:
- Ausführen einer Gesichtserkennung auf dem Vorschaubild und Versehen mindestens eines erkannten Gesichts mit einem vorbestimmten visuellen Effekt, und
- wenn ein visueller Effekt ausgewählt ist, Festlegen eines dem ausgewählten visuellen Effekts entsprechenden Gegenstands als den ersten Gegenstand.

9. Mobiles Endgerät nach Anspruch 1, wobei die Steuereinheit ferner dazu konfiguriert ist, wenn der erste Gegenstand sich in einer Richtung bewegt, die aus einem maximal verfügbaren fotografierbaren Bildwinkel der zwei Kameras herausführt, einen ersten visuellen Effekt in einem Bereich vorzusehen, der dem ersten Gegenstand in einem auf dem Berührungsbildschirm (151) angezeigten Vorschaubild entspricht.

10. Mobiles Endgerät nach Anspruch 9, wobei dann, wenn der erste visuelle Effekt ausgewählt ist, die Steuereinheit (180) ferner dazu konfiguriert ist, einen zweiten visuellen Effekt entsprechend einer Bewegungsrichtung des ersten Gegenstands zu steuern.

11. Verfahren zum Steuern eines mobilen Endgeräts (100), umfassend:
Erhalten eines Bilds mittels zweier an einem rückwärtigen Gehäuse (102) des mobilen Endgeräts vorhandener Kameras, wobei die zwei Kameras eine erste Kamera (121-1) und eine zweite Kamera (121-2) umfassen, die durch einen vorbestimmten Abstand getrennt sind,
Anzeigen des erhaltenen Bildes mittels eines Berührungsbildschirms (151) des mobilen Endgeräts,
Ermitteln eines ersten Gegenstands in dem erhaltenen Bild,
Steuern einer Aktivierung jeder der zwei Kameras entsprechend einer Position des ersten Gegenstands,
Steuern eines Bildwinkels jeder der aktivierten Kameras entsprechend der Position des ersten Gegenstands, um auf dem Berührungsbildschirm den ersten Gegenstand in einem dargestellten Fotografierergebnisbild fortwährend anzuzeigen,
Erfassen einer Bewegung des mobilen Endgeräts mittels einer Erfassungseinheit (140) des mobilen Endgeräts, und
Erhalten eines Vorschaubilds mittels einer Kamera, die unter den beiden Kameras unter Berücksichtigung der Position des ersten Gegenstands relativ zu dem mobilen Endgerät basierend auf der erfassten Bewegung des mobilen Endgeräts dem ersten Gegenstand näher ist.

12. Computerlesbares Medium mit Programmabschnitten, die dann, wenn sie auf einem Prozessor ausgeführt werden, den Prozessor dazu konfigurieren, alle Schritte eines Verfahrens nach Anspruch 11 durchzuführen.

## Revendications

1. Terminal mobile (100) comprenant :
deux caméras (121-1, 121-2) conçues pour obtenir une image, les deux caméras étant prévues au niveau d'un boîtier arrière du terminal mobile et les deux caméras comprenant une première caméra (121-1) et une deuxième caméra (121-2) séparées par un espace prédéterminé ;
un écran tactile (151) conçu pour afficher l'image obtenue ;
une unité de détection (140) conçue pour détecter un mouvement du terminal mobile ; et
un dispositif de commande (180) conçu pour :
- déterminer un premier sujet dans l'image obtenue, et
- commander l'activation dans chacune des deux caméras en fonction d'un emplacement du premier sujet,
- commander un angle de vue de chacune des caméras activées en fonction de l'emplacement du premier sujet de manière à afficher en continu, sur l'écran tactile, le premier sujet dans une image de résultat photographique affichée ; et
- obtenir une image prévisualisée par le biais d'une caméra plus proche du premier sujet parmi les deux caméras en considérant l'emplacement du premier sujet par rapport au terminal mobile sur la base du mouvement détecté du terminal mobile.

2. Terminal mobile selon la revendication 1, dans lequel les deux caméras peuvent tourner autour d'au moins un axe de rotation sur la base d'une commande par le dispositif de commande (180), et le dispositif de commande (180) est conçu en outre pour changer l'angle de vue en tournant les deux caméras autour de l'axe de rotation.

3. Terminal mobile selon la revendication 2, dans lequel :
- le dispositif de commande (180) est conçu en outre pour commander aux deux caméras de tourner dans un sens de mouvement du premier sujet ; ou
- le dispositif de commande (180) est conçu en outre pour commander aux deux caméras de tourner dans un sens opposé à un sens de mouvement du terminal mobile.

4. Terminal mobile selon la revendication 1, dans lequel le dispositif de commande (180) est conçu pour commander soit à la première caméra (121-1), soit à la deuxième caméra (121-2) d'être activées sur la base d'un sens de mouvement du premier sujet.

5. Terminal mobile selon la revendication 1, dans lequel :
le dispositif de commande (180) est conçu en outre pour activer la première (121-1) ou la deuxième (121-2) caméra dans un sens opposé au sens de mouvement du terminal mobile sur la base d'angles de vue des première (121-1) et deuxième (121-2) caméras ; ou
chacune de la première caméra (121-1) et de la deuxième caméra (121-2) peut être tournée séparément autour d'un axe de rotation sur la base d'une commande par le dispositif de commande (180).

6. Terminal mobile selon la revendication 1, comprenant en outre une troisième caméra (121) conçue pour photographier une image de l'utilisateur, la troisième caméra étant prévue sur un boîtier avant (101) du terminal mobile et le dispositif de commande (180) est conçu en outre pour déterminer les yeux de l'utilisateur sur la base de l'image de l'utilisateur et détermine un sujet correspondant aux yeux déterminés en tant que premier sujet.

7. Terminal mobile selon l'une quelconque des revendications précédentes, dans lequel le dispositif de commande (180) est conçu en outre pour :
- commander à une image de prévisualisation obtenue par les deux caméras d'être affichée sur l'écran tactile, et
- déterminer le premier sujet en réponse à une entrée tactile sur l'image prévisualisée.

8. Terminal mobile selon la revendication 7, dans lequel le dispositif de commande (180) est conçu pour :
- effectuer une reconnaissance faciale sur l'image prévisualisée et prévoir un effet visuel prescrit sur au moins un visage reconnu, et
- lorsqu'un effet visuel est sélectionné, déterminer un sujet correspondant à l'effet visuel sélectionné en tant que premier sujet.

9. Terminal mobile selon la revendication 1, dans lequel le dispositif de commande est conçu en outre pour commander, lorsque le premier sujet se déplace dans un sens déviant d'un angle de vue disponible de prise de vue maximum des deux caméras, un premier effet visuel devant être prévu dans une région correspondant au premier sujet dans une image prévisualisée affichée sur l'écran tactile (151).

10. Terminal mobile selon la revendication 9, dans lequel le premier effet visuel est sélectionné, le dispositif de commande (180) est conçu en outre pour commander un second effet visuel correspondant à un sens de déplacement du premier sujet.

11. Procédé de commande d'un terminal mobile (100), consistant à :
obtenir une image par deux caméras prévues au niveau d'un boîtier arrière (102) du terminal mobile, les deux caméras comprenant une première caméra (121-1) et une deuxième caméra (121-2) séparées par un espace prédéterminé ;
afficher, par le biais d'un écran tactile (151) du terminal mobile, l'image obtenue ;
déterminer un premier sujet dans l'image obtenue,
commander l'activation de chacune des deux caméras en fonction d'un emplacement du premier sujet ;
commander un angle de vue de chacune des caméras activées en fonction de l'emplacement du premier sujet de manière à afficher en continu, sur l'écran tactile, le premier sujet dans une image de résultat photographique affichée ;
détecter, par le biais d'une unité de détection (140) du terminal mobile, un mouvement du terminal mobile ; et
obtenir une image prévisualisée par le biais d'une caméra plus proche du premier sujet parmi les deux caméras en considérant l'emplacement du premier sujet par rapport au terminal mobile sur la base du mouvement détecté du terminal mobile.

12. Support lisible par ordinateur comprenant des parties de code qui, lorsqu'elles sont exécutées sur un processeur, configurent le processeur pour mettre en oeuvre toutes les étapes d'un procédé selon la revendication 11.
